# EUROPÄISCHE PATENTANMELDUNG

(11) **EP 4 706 914 A1**
(43) Veröffentlichungstag der Anmeldung: **11.03.2026**
(21) Anmeldenummer: 25196263.5
(22) Anmeldetag: 15.08.2025
(51) Int. Cl.: B25J 15/06, B65G 47/92

(54) **MAGNETGREIFER UND MAGNETGREIFER-SYSTEM**

(30) Priorität: 09.09.2024 DE 102024125824
(71) Anmelder: J. Schmalz GmbH, 72293 Glatten (DE)
(72) Erfinder: Storz, Michael, 72186 Empfingen (DE); Clauß, Johannes, 75387 Neubulach (DE)
(74) Vertreter: DREISS Patentanwälte PartG mbB

(57) **Zusammenfassung**

Magnetgreifer (10) zum Greifen eines ferromagnetischen Werkstücks (72), aufweisend: ein Gehäuse (12); einen Magneten (16), der in dem Gehäuse (12) angeordnet ist und der entlang einer Verschieberichtung (24) zwischen einer Greifposition zum Greifen des ferromagnetischen Werkstücks (72) und einer Freigabeposition zum Freigeben des ferromagnetischen Werkstücks (72) verschiebbar ist; und einer Anzahl von Polschuhen (26, 28), die an dem Gehäuse (12) befestigt sind. Jeder Polschuh (26, 28) weist eine Werkstück-Kontaktfläche (40, 42) auf und ist für das Führen eines Magnetfeldanteils des Magneten (16) zu der Werkstück-Kontaktfläche (40, 42) ausgebildet. Jede Werkstück-Kontaktfläche (40, 42) definiert zwischen sich und der Verschieberichtung (24) einen Kontaktflächen-Winkel (44). Der Kontaktflächen-Winkel (44) weist einen Betrag in einem Bereich von 170° bis 190° auf.

## Beschreibung

Die Erfindung betrifft einen Magnetgreifer und ein Magnetgreifer-System.

Bekannte Magnetgreifer verfügen über einen Magneten, oftmals Permanentmagnet, zum Erzeugen eines Magnetfelds zum Greifen von ferromagnetischen Werkstücken und es kommen Polschuhe zum Führen eines Magnetfeldanteils des Magnetfelds zu dem zu greifenden Werkstück zum Einsatz.

DE 20 2019 005 976 U1 offenbart einen Magnetgreifer mit einem Permanentmagneten. Der Permanentmagneten ist entlang einer vertikalen Achse zwischen einer abgesenkten Position und einer angehobenen Position beweglich. Der Magnetgreifer hat zwei Polschuhe, die jeweils eine Werkstückkontaktfläche für das Kontaktieren eines zu greifenden ferromagnetischen Werkstücks aufweisen. Wenn der Permanentmagnet sich in der abgesenkten Position befindet und die Werkstückkontaktflächen der Polschuhe das zu greifende Werkstück kontaktieren, wird das zu greifende Werkstück mit einer Magnetkraft beaufschlagt und gegen die Werkstückkontaktflächen gedrückt. Jede Werkstückkontaktfläche ist dabei orthogonal zu der vertikalen Achse bzw. zur Bewegungsachse des Magneten ausgerichtet. Insofern sind solche Magnetgreifer im Betrieb meist vertikal aufgerichtet und benötigen daher viel Raum in vertikaler Richtung.

Der Erfindung liegt als Aufgabe zugrunde, ein sicheres Greifen eines ferromagnetischen Werkstücks auch bei nicht vertikalen Greifgeometrien oder beschränktem Platzangebot zu ermöglichen und/oder spezielle Greifaufgaben, wie beispielsweise das Greifen von Blechen, zu lösen.

Die Erfindung löst diese Aufgabe durch einen Magnetgreifer mit den Merkmalen des Anspruchs 1 und durch ein Magnetgreifer-System mit den Merkmalen des Anspruchs 14. Vorteilhafte Ausgestaltungen und Weiterbildungen der Erfindung ergeben sich aus den abhängigen Ansprüchen.

Ein erfindungsgemäßer Magnetgreifer ist zum Greifen eines ferromagnetischen Werkstücks ausgebildet. Der Magnetgreifer weist ein Gehäuse, einen Magneten und eine Anzahl, beispielsweise 1, 2 oder 3, von Polschuhen auf. Der Magnet ist in dem Gehäuse angeordnet und entlang einer, insbesondere geraden, Verschieberichtung oder Verschiebeachse zwischen einer Greifposition zum Greifen des ferromagnetischen Werkstücks und einer Freigabeposition zum Freigeben des ferromagnetischen Werkstücks verschiebbar. Die Anzahl von Polschuhen sind an dem Gehäuse befestigt. Jeder Polschuh weist eine Werkstück-Kontaktfläche auf und ist für das Führen, insbesondere Lenken, eines Magnetfeldanteils des Magneten zu der Werkstück-Kontaktfläche ausgebildet. Jede der Werkstück-Kontaktfläche ist zumindest im wesentlichen parallel zu der Verschieberichtung ausgerichtet, d.h. definiert zwischen sich und der Verschieberichtung oder Verschiebeachse einen Kontaktflächen-Winkel, der einen Betrag in einem Bereich von 170° bis 190° aufweist. Insbesondere sind die Werkstück-Kontaktflächen parallel zu der Verschieberichtung ausgerichtet.

Vorteilhafterweise kann durch das Ausrichten der Werkstück-Kontaktfläche jedes Polschuhs mit dem Kontaktflächen-Winkel zu der Verschieberichtung eine Höhe, insbesondere eine maximale Bauhöhe, des Magnetgreifers, die in einer zu der Werkstück-Kontaktfläche orthogonalen Richtung messbar ist, reduziert werden. Durch die reduzierte Höhe des Magnetgreifers muss beispielsweise eine Bearbeitungsmaschine (z.B., Pressmaschine, Transferpresse, Stanzmaschine) ihre jeweiligen Werkzeuge nur mit einem geringeren Hub öffnen, um mittels des Magnetgreifers das Werkstück einzusetzen oder um das bearbeitete Werkstück zu entnehmen. Durch die Reduzierung des Hubs kann eine Dauer für das Öffnen des Werkzeugs reduzieren werden, weshalb mittels der Pressmaschine oder Stanzmaschine nacheinander eine Mehrzahl von Werkstücken in einem kürzeren Zeitraum bearbeitet werden können. Daher können mittels des Magnetgreifers ein Durchsatz sowie eine Taktzeit der Pressmaschine oder Stanzmaschine erhöht und die Stückkosten für die Bearbeitung eines Werkstücks reduziert werden.

Ein weiterer Aspekt des Magnetgreifers kann sein, dass nach dem Einsetzen des Werkstücks in die Pressmaschine oder Stanzmaschine und nach dem Lösen des Werkstücks von dem Magnetgreifer, der Magnetgreifer nur geringfügig von dem Werkstück wegbewegt werden muss, um den Magnetgreifer aus einem Arbeitsbereich der Pressmaschine oder Stanzmaschine zu entfernen. Deshalb kann der Hub geringfügig, beispielsweise 2% oder 1%, mehr als eine Summe aus Höhe des Magnetgreifers und Dicke des Werkstücks betragen. Deshalb kann das Öffnen der Pressmaschine oder Stanzmaschine mit einem besonders geringen Hub ermöglicht werden.

Nach einem Aspekt der Erfindung kann der Magnetgreifer auf dem Prinzip beruhen, dass ein Abstand entlang einer zu der Werkstück-Kontaktfläche orthogonal verlaufenden Geraden zwischen der Werkstück-Kontaktfläche und dem Magneten in der Greifposition und ein Abstand entlang der zu der Werkstück-Kontaktfläche orthogonal verlaufenden Geraden zwischen der Werkstück-Kontaktfläche und dem Magneten in der Freigabeposition einen gleichen Betrag aufweisen.

Das ferromagnetische Werkstück kann aus Eisen oder Stahl gebildet sein. Das Werkstück kann ein Blech oder eine Platte sein. Insbesondere kann eine Breite und/oder eine Länge des Werkstücks mehr als das Fünffache, insbesondere das Zehnfache, einer Dicke des Werkstücks betragen. Die Dicke des Werkstücks kann beispielsweise ein Betrag in einem Bereich von 0,5 mm (Millimeter) bis 5 cm (Zentimeter), insbesondere 0,5 mm bis 5 mm, aufweisen.

Unter dem Greifen des Werkstücks kann verstanden werden, dass der von der Anzahl von Polschuhen geführte Magnetfeldanteil derart in das Werkstück eingekoppelt wird, dass das Werkstück durch den eingekoppelten Magnetfeldanteil eine Magnetkraft erfährt, die das Werkstück gegen die Polschuhe drückt. Die Magnetkraft ist dann insbesondere größer als die Gewichtskraft des Werkstücks. Anders formuliert, das ferromagnetische Werkstück kann mittels des Magnetgreifers gegriffen sein, wenn der mittels der Anzahl von Polschuhen geführte Magnetfeldanteil das Werkstück gegen die Werkstück-Kontaktfläche drückt oder presst. Die Werkstück-Kontaktfläche kann auch als Werkstück-Anlagefläche bezeichnet werden.

Das Gehäuse kann einteilig ausgebildet sein oder eine Mehrzahl von Gehäuseteile aufweisen, die in einem zusammengesetzten Zustand das Gehäuse bilden. Das Gehäuse kann nicht magnetisierbar ausgebildet sein. Das Gehäuse kann aus einem nichtferromagnetischen Material, beispielsweise Aluminium, gebildet sein. Das Gehäuse kann einen Innenraum aufweisen, in dem der Magnet angeordnet ist.

Der Magnet kann von dem Gehäuse getragen sein. Der Magnet dient dazu, ein Magnetfeld zu erzeugen, wobei zumindest ein Magnetfeldanteil durch die Polschuhe geleitet wird. Der Magnet kann ein Permanentmagnet und/oder ein Elektromagnet sein. Insbesondere die Ausbildung des Magneten als Permanentmagneten kann ein sicheres und zuverlässiges Greifen des Werkstücks ermöglichen, da bei einem Stromausfall das Werkstück weiterhin sicher und zuverlässig gegriffen ist.

Vorzugsweise kann der Magnetgreifer einen einzigen Polschuh oder zwei Polschuhe aufweisen. Falls der Magnetgreifer zwei Polschuhe aufweist, können diese an entgegengesetzten Seiten des Gehäuses an dem Gehäuse befestigt sein. Anders formuliert, falls der Magnetgreifer zwei Polschuhe aufweist, kann das Gehäuse zwischen den beiden Polschuhen liegen.

Jeder Polschuh kann lösbar, insbesondere mittels einer Schraubverbindung, an dem Gehäuse befestigt sein. Dadurch kann jeder Polschuh ausgetauscht werden. Beispielsweise kann ein defekter Polschuh durch einen funktionstüchtigen Polschuh getauscht werden, wodurch sich eine Reparatur des Magnetgreifers vereinfacht. Weiter beispielsweise ermöglicht das Austauschen der Anzahl von Polschuhen ein Anpassen des Magnetgreifers an das zu greifende Werkstück. Dies kann durch Befestigen von Polschuhen an dem Gehäuse erfolgen, die für das Greifen des Werkstücks optimal sind. Vorteilhafterweise kann dadurch der Magnetgreifer an unterschiedliche Werkstücke angepasst werden, wodurch sich die Einsatzmöglichkeiten des Magnetgreifers erhöhen.

Der Magnetgreifer kann eine Befestigungs-Einrichtung für das Befestigen des Polschuhs an dem Gehäuse aufweisen. Die Befestigungs-Einrichtung kann mindestens ein Durchgangsloch in jedem Polschuh für das Aufnehmen einer Befestigungsschraube zum Herstellen einer Schraubverbindung zwischen den Polschuh und dem Gehäuse des Magnetgreifers aufweisen. Das Durchgangsloch kann als Senkbohrung ausgebildet sein. Zusätzlich oder alternativ kann die Befestigungs-Einrichtung mindestens ein Gewinde in dem Gehäuse oder in jedem Polschuh zum Herstellen der Schraubverbindung zwischen den Polschuh und dem Gehäuse des Magnetgreifers aufweisen.

Jeder Polschuh kann aus einem Material gebildet sein, das die Eigenschaft hat, Magnetfelder zu verstärken und/oder zu leiten. Jeder Polschuh kann aus einem ferromagnetischen Material, insbesondere Eisen, Stahl, Nickel oder Kobalt, gebildet sein.

Jeder Polschuh ist vorteilhafterweise einteilig ausgebildet. Mehrteilige Ausgestaltungen sind jedoch auch möglich, z.B. um die Montage des Magnetgreifers zu vereinfachen.

Unter dem Lenken oder Führen des Magnetfeldanteils des Magneten zu der Werkstück-Kontaktfläche kann verstanden werden, dass ein Anteil des Magnetfelds des Magneten durch und/oder mittels des Polschuhs umgelenkt, umgeformt und/oder bereichsweise konzentriert wird. Insbesondere wenn der Magnet in der Greifposition ist, kann der von der Anzahl der Polschuhe geführte Magnetfeldanteil ein für das Greifen des Werkstücks erforderlicher oder gewünschter Anteil des Magnetfelds sein. Der Magnetfeldanteil kann durch die Anzahl von Polschuhe geführt sein, wenn eine Magnetfeldlinie des Magnetfelds innerhalb der Anzahl von Polschuhe verläuft und aus der Werkstück-Kontaktfläche austritt.

Der Magnet kann einen Nordpol und einen Südpol aufweisen. Das Magnetfeld des Magneten kann sich von dem Nordpol zu dem Südpol erstreckt.

Der Magnet kann durch eine Translationsbewegung zwischen der Greifposition und der Freigabeposition überführbar sein. Die Translationsbewegung kann eine gerade Bewegung sein, insbesondere eine Vertikalbewegung. Anders formuliert, die Verschieberichtung kann einen geraden Verlauf aufweisen. Beispielsweise kann der Magnet durch eine lineare Verschiebung des Magneten entlang der Verschieberichtung zwischen der Greifposition und der Freigabeposition überführbar sein. Der Begriff Verschiebeachse oder Bewegungsachse kann alternativ zu dem Begriff Verschieberichtung verwendet werden.

Beispielsweise kann der Magnet durch eine Bewegung entlang der Verschieberichtung von der Freigabeposition in die Greifposition und durch eine Bewegung entgegengesetzt zu der Verschieberichtung von der Greifposition in die Freigabeposition überführt werden. Alternativ kann der Magnet durch eine Bewegung entgegengesetzt zu der Verschieberichtung von der Freigabeposition in die Greifposition und durch eine Bewegung entlang der Verschieberichtung von der Greifposition in die Freigabeposition überführt werden.

Der Magnet kann in dem Gehäuse linear verschiebbar, insbesondere entlang einer geraden Trajektorie verschiebbar sein.

Das Verschieben des Magneten von der Freigabeposition in die Greifposition kann durch eine Verschiebung des Magneten auf die Anzahl von Polschuhen zu erfolgen. Das Verschieben des Magneten von der Greifposition in die Freigabeposition kann durch eine Verschiebung des Magneten von der Anzahl von Polschuhen weg erfolgen. Anders formuliert, ein Betrag einer Distanz zwischen der Anzahl von Polschuhen und dem Magneten in der Greifposition kann kleiner sein als ein Betrag einer Distanz zwischen der Anzahl von Polschuhen und dem Magneten in der Freigabeposition. Dadurch kann, wenn der Magnet in der Greifposition ist, ein Magnetfeldanteil, der zu der Werkstück-Kontaktfläche jedes Polschuhs geführt wird, größer sein als ein Magnetfeldanteil, der zu der Werkstück-Kontaktfläche jedes Polschuhs geführt wird, wenn der Magnet in der Freigabeposition ist.

Wenn der Magnet in der Greifposition ist, kann der Magnetgreifer dazu ausgebildet sein, das Werkstück zu greifen. Wenn der Magnet in der Freigabeposition ist, kann der Magnetgreifer dazu ausgebildet sein, dass Werkstück nicht zu greifen. Eine Distanz zwischen einem an den Werkstück-Kontaktflächen angeordneten Werkstück und dem Magneten in der Greifposition kann geringer sein als eine Distanz zwischen dem an den Werkstück-Kontaktflächen angeordneten Werkstück und dem Magneten in der Freigabeposition.

Die Werkstück-Kontaktflächen können parallel zueinander ausgerichtet sein. Alle Werkstück-Kontaktflächen können in einer Ebene angeordnet sein. Die Werkstück-Kontaktflächen können eine, insbesondere Ebene, Haltefläche des Magnetgreifers bilden.

Jeder Kontaktflächen-Winkel kann einen Betrag in einem Bereich von 185° bis 185° aufweisen. Vorzugsweise kann jeder Kontaktflächen-Winkel 180° betragen. Wenn jeder Kontaktflächen-Winkel 180° beträgt, kann jede Werkstück-Kontaktfläche parallel zu der Verschieberichtung ausgerichtet sein, insbesondere kann sich jede Werkstück-Kontaktfläche parallel zu der Verschieberichtung erstrecken.

Die Werkstück-Kontaktfläche jedes Polschuhs kann zum berührenden Kontaktieren des ferromagnetischen Werkstücks ausgebildet sein.

Die Werkstück-Kontaktfläche jedes Polschuhs kann eben ausgebildet sein. Dies kann sinnvoll sein, da bei Werkstücken mit üblichen Größenverhältnissen der Anlagebereich für den Polschuh oft zumindest näherungsweise eben ist. Auch für das Entstapeln eines Stapels aus mehreren magnetischen Blechen o.ä. ist eine ebene Werkstück-Kontaktfläche oftmals sinnvoll. Eine unebene, z.B. gewölbte, Werkstück-Kontaktfläche kann hingegen dann sinnvoll sein, wenn das Werkstück an einem entsprechen unebenen, z.B. gewölbten, Bereich kontaktiert werden soll. Folglich kann die Werkstück-Kontaktfläche jedes Polschuhs je nach Anwendungsbereich eben oder gekrümmt, insbesondere konvex, ausgebildet sein. Die gewünschte, weitgehend parallele Ausrichtung der Werkstück-Kontaktfläche zur Verschieberichtung kann dann so definiert sein, dass die mittlere bzw. gemittelte Flächennormale der Werkstück-Kontaktfläche mit der Verschieberichtung den genannten Kontaktflächenwinkel einschließt oder insbesondere orthogonal zur Verschieberichtung ist.

Unter Entstapeln kann ein Greifen des obersten Werkstücks eines Stapels, insbesondere eines Werkstücks-Stapels, verstanden werden, ohne dass dabei das zweitoberste Werkstück gegriffen wird.

Die Werkstück-Kontaktfläche jedes Polschuhs kann als eine zusammenhängende Fläche ausgebildet sein. Dadurch kann eine Haltekraft, die beim Greifen eines Werkstücks auftritt, gleichmäßig auf eine größere Fläche verteilt werden. Deshalb kann eine gleichmäßigere Druckverteilung auf dem Werkstück erreicht werden, wodurch das Werkstück vor Verformungen oder Beschädigungen besser geschützt wird.

Unter Ausbildung der Werkstück-Kontaktfläche als eine zusammenhängende Fläche kann verstanden werden, dass zwei beliebige Punkte auf der Werkstück-Kontaktfläche durch eine kontinuierliche Kurve, Linie oder Pfad miteinander verbunden werden können, ohne dabei die Werkstück-Kontaktfläche zu verlassen. Mit anderen Worten, die kontinuierliche Kurve, Linie oder Pfad kann innerhalb der Werkstück-Kontaktfläche verlaufen.

Die zusammenhängende Fläche kann als unterbrechungsfreie Fläche bezeichnet werden. Insbesondere kann die zusammenhängende Fläche ohne Löcher und/oder ohne Unterbrechungen ausgebildet sein.

Ein weiterer Aspekt des Magnetgreifers kann sein, dass die Werkstück-Kontaktfläche dazu ausgebildet ist, über Bohrungen des Werkstücks hinweg zu kontaktieren. Dadurch kann sich eine Positionsfindung einer Stelle des Werkstücks, an der der Magnetgreifer das Werkstück greift, vereinfachen.

In einer Weiterbildung des Magnetgreifers erstreckt sich das Gehäuse entlang einer Längsachse. Die Verschieberichtung ist parallel zu der Längsachse ausgerichtet. Vorteilhafterweise kann durch das längliche Gehäuse der Magnetgreifer kompakt ausgebildet werden.

In einer Weiterbildung des Magnetgreifers weist jeder Polschuh eine Wirkstruktur zum Lenken des Magnetfeldanteils, insbesondere zu der Werkstück-Kontaktfläche, auf.

Durch das Lenken des Magnetfeldanteils mittels der Wirkstruktur kann eine Tiefenwirkung des Magnetfeldanteils auf das Werkstück reduziert werden. Insbesondere kann die Wirkstruktur die Tiefenwirkung des Magnetfeldanteils auf das Werkstück dadurch reduzieren, dass die Wirkstruktur den Magnetfeldanteil derart lenkt, dass ein Abstand der Magnetfeldlinien des Magnetfeldanteils nach einem Austreten des Magnetfeldanteils aus der Werkstück-Kontaktfläche zu der Werkstück-Kontaktfläche geringer ist als ein Abstand der Magnetfeldlinien des Magnetfeldanteils nach dem Austreten aus der Werkstück-Kontaktfläche zu der Werkstück-Kontaktfläche ohne Wirkstruktur. Durch die Reduktion der Tiefenwirkung kann ein Entstapeln, insbesondere von dünnen Werkstücken, erleichtert werden.

Das Lenken des Magnetfeldanteils mittels der Wirkstruktur kann ein wenigstens bereichsweises Fokussieren umfassen. Durch das Fokussieren des Magnetfeldanteils kann die Haltekraft des Magnetgreifers erhöht werden.

Die Wirkstruktur kann durch eine geometrische Gestaltung des Polschuhs zur gezielten Lenkung der magnetischen Feldlinien gebildet sein. Die geometrische Gestaltung kann mindestens eine Abschrägung und/oder mindestens eine Abrundung aufweisen. Die geometrische Gestaltung kann durch das Einbringen von Absätzen, Bohrungen, Ausnehmungen und/oder Stufen gebildet sein.

Die Wirkstruktur kann durch eine Materialanhäufung und/oder eine Materialreduktion gebildet sein. Die Wirkstruktur kann durch eine geometrische Form und/oder durch eine Mikrostruktur des Polschuhs gebildet sein. Die Wirkstruktur kann beispielsweise eine Anzahl von Kanälen, eine Anzahl von Schlitzen, eine Anzahl von Vertiefungen und/oder eine Anzahl von Erhebungen aufweisen. Die Wirkstruktur kann als eine periodische Struktur ausgebildet sein.

Die Wirkstruktur kann dazu ausgebildet sein, das Magnetfeld um 90° umzulenken.

In einer Weiterbildung des Magnetgreifers weist die Wirkstruktur eine Schräge auf. Die Schräge, insbesondere eine ebene Fläche der Schräge, und die Werkstück-Kontaktfläche definieren zwischen sich einen Schrägen-Winkel. Der Schrägen-Winkel weist ein Betrag in einem Bereich von 5° bis 85°, insbesondere 15° bis 75°, vorzugsweise 40° bis 60°, auf. Vorteilhafterweise kann durch die Schräge der Magnetfeldanteil an der Werkstück-Kontaktfläche erhöht werden.

Die Schräge kann als Abschrägung bezeichnet werden. Insbesondere kann durch die Schräge eine Ecke des Polschuhs abgeschrägt ausgebildet sein. Die Schräge und die Werkstück-Kontaktfläche können räumlich voneinander getrennt sein. Die Schräge und die Werkstück-Kontaktfläche können nicht, insbesondere unmittelbar, nebeneinander angeordnet sein.

Die Schräge kann durch die ebene Fläche gebildet sein. Die ebene Fläche kann nicht parallel und nicht orthogonal zu der Längsachse des Gehäuses ausgerichtet sein. Die ebene Fläche kann von der Werkstück-Kontaktfläche abgewandt sein.

In einer Weiterbildung des Magnetgreifers weist die Wirkstruktur eine Mehrzahl, beispielsweise 2, 3 oder 4, von Vorsprüngen für das Lenken des Magnetfeldanteils und für das Bilden der Werkstück-Kontaktfläche auf. Vorteilhafterweise können die Vorsprünge einfach herstellbar sein.

Jeder Vorsprung kann ein freies Ende aufweisen, das die Werkstück-Kontaktfläche abschnittsweise bildet. Eine Querschnittsfläche des Vorsprungs kann mit zunehmenden Abstand von dem Gehäuse bis zu seinem freien Ende einen konstanten Flächeninhalt aufweisen. Alternativ kann eine Querschnittsfläche des Vorsprungs mit zunehmenden Abstand von dem Gehäuse einen abnehmenden Flächeninhalt aufweisen.

Zwei benachbarte Vorsprünge können mittels einer Ausnehmung voneinander getrennt sein. Die Ausnehmung kann als Aussparung bezeichnet werden. Die Mehrzahl von Vorsprüngen jedes Polschuhs können gemeinsam die Werkstück-Kontaktfläche bilden. Insbesondere kann jeder Vorsprung ein Flächenabschnitt aufweisen, der einen Abschnitt der Werkstück-Kontaktfläche bildet. Die Flächenabschnitte der Mehrzahl von Vorsprüngen können die Werkstück-Kontaktfläche bilden. Das freie Ende jedes Vorsprungs kann durch den Flächenabschnitt gebildet sein. Der Flächenabschnitt kann ein ebener Flächenabschnitt sein.

Insbesondere kann eine Anzahl der Vorsprünge 2, 3 oder 4 betragen. Mit einer derartigen Anzahl von Vorsprüngen kann ein besonders sicheres und zuverlässiges Greifen des Werkstücks erreicht werden. Bei einer höheren Anzahl von Vorsprüngen können die weiteren Vorsprünge von dem Magneten in der Greifposition derart weit entfernt sein, dass diese das Greifen des Werkstücks nicht weiter sicherer oder zuverlässiger machen. Daher kann jede Wirkstruktur nicht mehr als vier Vorsprünge aufweisen.

In einer Weiterbildung des Magnetgreifers weist die Mehrzahl von Vorsprüngen zumindest einen ersten Vorsprung und einen zweiten Vorsprung auf. Der erste Vorsprung und der zweite Vorsprung sind zueinander benachbart angeordnet. Der erste Vorsprung ist von dem zweiten Vorsprung durch eine Ausnehmung, insbesondere eine Aussparung, getrennt. Eine Tiefe und/oder eine Länge der Ausnehmung weist einen Wert auf, der um höchstens 25%, insbesondere 10%, 5% oder 1%, von einem Wert einer Länge des ersten Vorsprungs und/oder von einem Wert einer Länge des zweiten Vorsprungs abweicht. Vorteilhafterweise kann dadurch eine Reduktion der Tiefenwirkung für das Entstapeln von dünnen Werkstücken erreicht werden.

Vorzugsweise kann die Länge der Ausnehmung einen Wert aufweisen, der um höchstens 25% von dem Wert der Länge des ersten Vorsprungs und/oder von dem Wert der Länge des zweiten Vorsprungs abweicht. Eine Länge des ersten Vorsprungs und eine Länge des zweiten Vorsprungs können einen gleichen Betrag aufweisen.

Die Tiefe und/oder die Länge der Ausnehmung kann einen Wert aufweisen, der gleich einem Wert der Länge des ersten Vorsprungs und/oder der gleich einem Wert der Länge des zweiten Vorsprungs ist.

In einer Weiterbildung des Magnetgreifers weist der Magnetgreifer eine Positionierungs-Einrichtung für das Positionieren des Werkstücks an den Werkstück-Kontaktflächen der Anzahl von Polschuhen auf. Vorteilhafterweise kann dadurch das Positionieren des Werkstücks in einer definierten Position an den Werkstück-Kontaktflächen sichergestellt werden.

Die Positionierungs-Einrichtung kann an der Werkstück-Kontaktfläche angrenzen. Die Positionierungs-Einrichtung kann ein Anschlag und/oder Führung, beispielsweise in Form einer Fläche, aufweisen. Die Führung kann dazu ausgebildet sein, das Werkstück zu der Werkstück-Kontaktfläche zu führen. Der Anschlag kann eine Bewegung des Werkstücks, wenn das Werkstück an den Werkstück-Kontaktflächen angeordnet ist, begrenzen.

Beispielsweise kann die Werkstück-Kontaktfläche in die Nähe des Werkstücks gebracht und der Magnet in die Greifposition verschoben werden. Dadurch kann das Magnetfeld des Magneten auf das Werkstück wirken. Die daraus resultierende Magnetkraft kann das Werkstück gegen die Führung der Positionierungs-Einrichtung drücken, so dass das Werkstück die Führung entlang gleitet und dadurch das Werkstück zu den Werkstück-Kontaktflächen geführt wird, bis das Werkstück gegen die Werkstück-Kontaktflächen flächig anliegt.

Das Gehäuse und/oder die Anzahl von Polschuhen können die Positionierungs-Einrichtung aufweisen. Beispielsweise kann die Positionierungs-Einrichtung durch einen Flächenabschnitt der Polschuhe und einen weiteren Flächenabschnitt des Gehäuses gebildet sein. Insbesondere kann jeder Polschuh einen Flächenabschnitt für das Bildenden der Positionierung-Einrichtung aufweisen.

In einer Weiterbildung des Magnetgreifers weist die Anzahl von Polschuhen einen ersten Polschuh und einen zweiten Polschuh auf. Der Magnet ist derart in dem Gehäuse angeordnet, dass in der Greifposition der erste Polschuh als Nordpol und der zweite Polschuh als Südpol wirken. Vorteilhafterweise ermöglichen die beiden Polschuhe eine effiziente Nutzung des Magnetfeldanteils weshalb der Magnetgreifer besonders sicher und zuverlässig das Werkstück greifen kann.

Der Magnet kann derart in dem Gehäuse angeordnet sein, dass in der Greifposition der Nordpol auf den ersten Polschuh und der Südpol auf den zweiten Polschuh gerichtet ist.

In einer Weiterbildung des Magnetgreifers ist der Magnet elektrisch, pneumatisch oder mechanisch zwischen der Greifposition und der Freigabeposition verschiebbar. Vorteilhafterweise kann dadurch der Magnetgreifer mit einer geringen Anzahl von Komponenten hergestellt werden.

Der Magnetgreifer kann einen Aktuator zum Verschieben des Magneten zwischen der Greifposition und der Freigabeposition aufweisen. Der Aktuator kann dazu ausgebildet sein, die Verschiebung des Magneten anzutreiben. Der Aktuator kann einen Elektromotor für das elektrische Verschieben, einen Hebel für das mechanische Verschieben oder ein pneumatischer Antrieb für das pneumatische Verschieben des Magneten aufweisen.

Vorzugsweise kann der Magnet pneumatisch verschiebbar sein und der Aktuator kann einen Pneumatik-Kolben aufweisen, der mit dem Magneten, insbesondere unmittelbar, verbunden ist. Das Gehäuse kann einen Pneumatik-Zylinder aufweisen, in dem der Pneumatik-Kolben, insbesondere verschiebbar, angeordnet ist.

In einer Weiterbildung des Magnetgreifers weist der Magnetgreifer einen Position-Sensor zum Detektieren der Greifposition und/oder der Freigabeposition auf. Zusätzlich oder alternativ weist der Magnetgreifer einen Werkstück-Sensor zum Detektieren des Werkstücks auf.

Der Werkstück-Sensor kann dazu ausgebildet sein, zu erfassen, ob sich das Werkstück an den Werkstück-Kontaktflächen der Polschuhe befindet, insbesondere anliegt. Der Werkstück-Sensor kann einen mechanischen Taster, einen optischen Sensor und/oder einen induktiven Sensor, insbesondere ein Magnetfeldsensor, vorzugsweise ein Hall-Sensor, aufweisen.

Der Werkstück-Sensor kann dazu ausgebildet sein, eine Dicke des Werkstücks und/oder ein unter dem Werkstück befindliches Material zu detektieren. Der Werkstück-Sensor kann dazu ausgebildet sein, das Verschieben des Magneten zwischen der Greifposition und der Freigabeposition in Abhängigkeit von der detektierten Dicke des Werkstücks und/oder das detektierte, unter dem Werkstück befindliche Material freizugeben und/oder zu verhindern. Dadurch kann ein Stapel von Werkstücken zuverlässig entstapelt, insbesondere vereinzelt, werden. Auch kann dadurch eine Qualitätskontrolle des Werkstücks erfolgen. Beispielsweise können mit dem Magnetgreifer nur Werkstücke gegriffen werden, deren Dicke in einem vorgegebenen Bereich liegen.

Der Position-Sensor kann dazu ausgebildet sein, zu erfassen, ob eine Verschiebung des Magneten von der Greifposition in die Freigabeposition und/oder von der Freigabeposition in die Greifposition erfolgreich abgeschlossen ist. Der Position-Sensor kann einen mechanischen Taster, einen optischen Sensor und/oder einen induktiven Sensor, insbesondere ein Magnetfeldsensor, vorzugsweise ein Hall-Sensor, aufweisen.

In einer Weiterbildung des Magnetgreifers weist das Gehäuse eine Aufnahme, insbesondere in Form einer Nut, zum Aufnehmen des Werkstück-Sensors und/oder einer Versorgungsleitung auf. Vorteilhafterweise kann mittels der Nut der Werkstück-Sensor und/oder die Versorgungsleitung an einer definierten Position positioniert werden.

Die Aufnahme kann sich parallel zu der Längsachse des Gehäuses und/oder parallel zu der Verschieberichtung erstrecken. Die Aufnahme kann an einer Seite des Magnetgreifers, die die Werkstück-Kontaktflächen aufweist, offen ausgebildet sein. Dadurch kann der Werkstück-Sensor unmittelbar einem mit dem Magnetgreifer gegriffenen Werkstück zugewandt sein, wodurch sich ein Detektionsergebnis des Werkstück-Sensors verbessert.

Die Aufnahme kann einen T-förmigen Querschnitt aufweisen. Vorteilhafterweise kann der T-förmige Querschnitt das Befestigen des Werkstück-Sensors und/oder der Versorgungsleitung an dem Gehäuse vereinfachen.

In einer Weiterbildung des Magnetgreifers weist der Magnetgreifer eine Manipulator-Schnittstelle zum Befestigen des Magnetgreifers an einem Manipulator auf. Dadurch kann ein besonders einfaches und schnelles Anschließen des Magnetgreifers an dem Manipulator erfolgen.

Die Manipulator-Schnittstelle kann zum werkzeuglosen Befestigen des Magnetgreifers an dem Manipulator und/oder zum werkzeuglosen Lösen des Magnetgreifers von dem Manipulator ausgebildet sein. Die Manipulator-Schnittstelle kann eine Schnellkupplung, beispielsweise in Form eines Bajonettverschlusses, aufweisen.

Der Manipulator kann beispielsweise ein Roboter oder Roboterarm sein. Die Manipulator-Schnittstelle kann an dem Gehäuse angeordnet sein. Die Manipulator-Schnittstelle kann ein freies Ende des Magnetgreifers bilden.

Die Manipulator-Schnittstelle und das Gehäuse können voneinander elektrisch isoliert sein. Dadurch kann verhindert werden, dass elektrischer Strom von dem Werkstück in den Manipulator oder von dem Manipulator in das Werkstück gelangt. Dadurch kann die Pressmaschine oder die Stanzmaschine, die das Werkstück bearbeiten, und der Manipulator vor Beschädigung durch elektrischen Strom geschützt werden.

Die Manipulator-Schnittstelle kann kugelförmig ausgebildet sein. Die Manipulator-Schnittstelle kann eine Kugel eines Kugelgelenks sein. Die Manipulator-Schnittstelle kann dazu ausgebildet sein, unter Bildung eines Kugelgelenks an dem Manipulator befestigt zu werden. Vorteilhafterweise kann mittels des Kugelgelenks eine hohe Bewegungsfreiheit bei gleichzeitiger einfacher Positionierung des Magnetgreifers relativ zu dem Manipulator erreicht werden.

In einer Weiterbildung des Magnetgreifers ist ein Gehäuseabschnitt des Gehäuses dazu ausgebildet, ein Austreten des Magnetfelds des Magneten aus dem Gehäuseabschnitt zu verhindern, insbesondere wenn der Magnet sich in der Freigabeposition befindet. Zusätzlich oder alternativ weist der Magnetgreifer eine Abschirm-Einrichtung auf, die dazu ausgebildet ist, ein Austreten des Magnetfelds des Magneten aus dem Gehäuse zumindest abschnittsweise zu verhindern, insbesondere wenn der Magnet sich in der Freigabeposition befindet. Vorteilhafterweise kann dadurch ein Wirken einer ungewollten Magnetkraft auf das Werkstück oder auf andere ferromagnetische Gegenstände, die in der Nähe des Magnetgreifers platziert sind, verhindert werden.

Vorzugsweise kann in der Freigabeposition der Magnet von dem Gehäuseabschnitt, der das Austreten des Magnetfelds verhindert, und/oder der Abschirm-Einrichtung zumindest abschnittsweise umgeben sein. Der Gehäuseabschnitt kann aus einem ferromagnetischen Material, insbesondere Eisen oder Stahl, gebildet sein. Der Gehäuseabschnitt kann kreisringförmig oder holzylinderförmig ausgebildet sein.

Die Abschirm-Einrichtung kann aus einem ferromagnetischen Material, insbesondere Eisen oder Stahl, gebildet sein. Die Abschirm-Einrichtung kann kreisringförmig oder holzylinderförmig ausgebildet sein.

Vorteilhafterweise kann beim Verschieben des Magneten in die Freigabeposition das Magnetfeld des Magneten derart auf den Gehäuseabschnitt, der das Austreten des Magnetfelds verhindert, und/oder auf die Abschirm-Einrichtung wirken, dass eine Magnetkraft die Verschiebung des Magneten in die Freigabeposition unterstützt.

Wenn der Magnetgreifer den Gehäuseabschnitt, der das Austreten des Magnetfelds verhindert, und/oder die Abschirm-Einrichtung aufweist, kann das Merkmal, dass der Kontaktflächen-Winkel ein Betrag in einem Bereich von 170° bis 190° aufweist, und/oder das Merkmal, dass jede Werkstück-Kontaktfläche zwischen sich und der Verschieberichtung einen Kontaktflächen-Winkel definiert, optional sein. Anders formuliert, wenn der Magnetgreifer den Gehäuseabschnitt, der das Austreten des Magnetfelds verhindert, und/oder die Abschirm-Einrichtung aufweist, kann der Magnetgreifer das Merkmal, dass der Kontaktflächen-Winkel ein Betrag in einem Bereich von 170° bis 190° aufweist, und/oder das Merkmal, dass jede Werkstück-Kontaktfläche zwischen sich und der Verschieberichtung einen Kontaktflächen-Winkel definiert, aufweisen oder nicht aufweisen.

Ein erfindungsgemäßes Magnetgreifer-System weist einen zuvor beschriebenen Magnetgreifer und das ferromagnetische Werkstück auf. In einem Greifzustand befindet sich der Magnet in der Greifposition und das ferromagnetische Werkstück ist mittels einer Magnetkraft gegen jede Werkstück-Kontaktfläche gedrückt. In einem Freigabezustand befindet sich der Magnet in der Freigabeposition und das ferromagnetische Werkstück ist gegen keine Werkstück-Kontaktfläche gedrückt.

In der Greifposition kann das Magnetfeld des Magneten dazu ausgebildet sein, das ferromagnetische Werkstück mit einer auf die Werkstück-Kontaktfläche gerichteten Magnetkraft zu beaufschlagen, die vorzugsweise größer als eine Gewichtskraft des ferromagnetischen Werkstücks ist. Dadurch kann das Werkstück mittels der Magnetkraft gegen die Werkstück-Kontaktfläche gedrückt oder gepresst werden.

In einer Weiterbildung des Magnetgreifer-Systems weist zumindest einer der Vorsprünge eine Länge auf, deren Wert um höchstens 25% von einem Wert einer Dicke des Werkstücks abweicht. Vorteilhafterweise kann dadurch eine weitere Reduktion der Tiefenwirkung für das Entstapeln von dünnen Werkstücken erreicht werden.

Weitere Vorteile und vorteilhafte Ausgestaltungen der Erfindung sind den Figuren, deren Beschreibung und den Ansprüchen entnehmbar. Alle in den Figuren, deren Beschreibung und den Ansprüchen offenbarten Merkmale können sowohl einzeln als auch in beliebiger Kombination miteinander erfindungswesentlich sein. Es zeigen:
- Fig. 1: eine schematische Schrägansicht eines Magnetgreifers,
- Fig. 2: eine weitere schematische Schrägansicht des Magnetgreifers,
- Fig. 3: eine schematische Seitenansicht des Magnetgreifers mit einem Magneten in einer Freigabeposition,
- Fig. 4: eine schematische Seitenansicht des Magnetgreifers mit dem Magneten in einer Greifposition,
- Fig. 5: eine weitere schematische Seitenansicht des Magnetgreifers,
- Fig. 6: eine schematische Detailansicht von Polschuhen des Magnetgreifers,
- Fig. 7: eine schematische Draufsicht auf eine Manipulator-Schnittstelle des Magnetgreifers,
- Fig. 8: eine schematische Darstellung des Magnetgreifers während dem Endstapel eines Blechs,
- Fig. 9: eine schematische Schrägansicht eines weiteren Ausführungsbeispiels eines erfindungsgemäßen Magnetgreifers,
- Fig. 10: eine schematische Detailansicht von Polschuhen des Magnetgreifers von Fig. 9,
- Fig. 11: eine schematische Darstellung eines weiteren Ausführungsbeispiels eines erfindungsgemäßen Magnetgreifers, und
- Fig. 12: eine weitere schematische Darstellung des Magnetgreifers von Fig. 11.

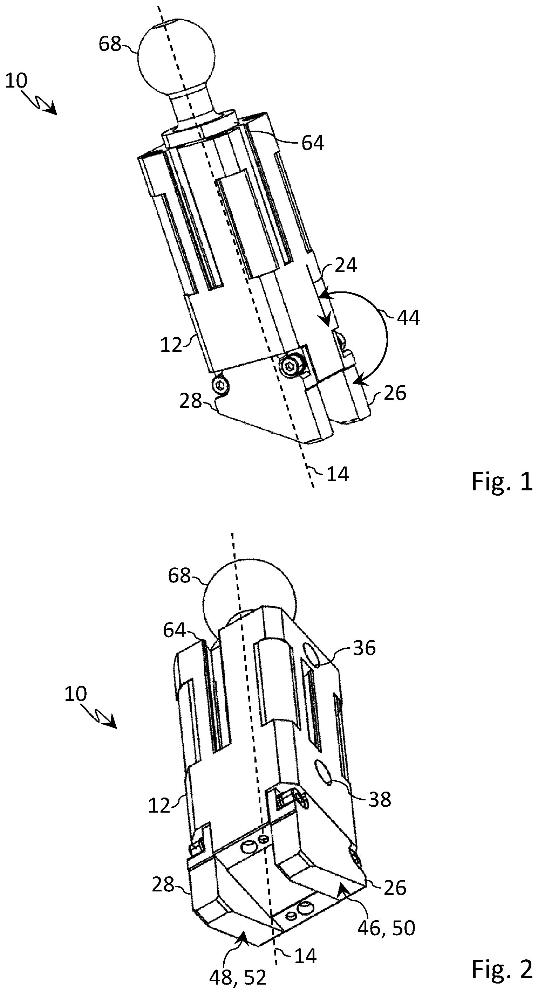

Fig. 1 bis 4 zeigen einen Magnetgreifer 10. Der Magnetgreifer 10 ist für das Greifen eines ferromagnetischen Werkstücks ausgebildet.

Der Magnetgreifer 10 hat ein Gehäuse 12. Das Gehäuse 12 ist länglich ausgebildet. Das Gehäuse 12 erstreckt sich entlang einer Längsachse 14. Das Gehäuse 12 ist nicht magnetisierbar. Das Gehäuse 12 ist aus Aluminium gebildet.

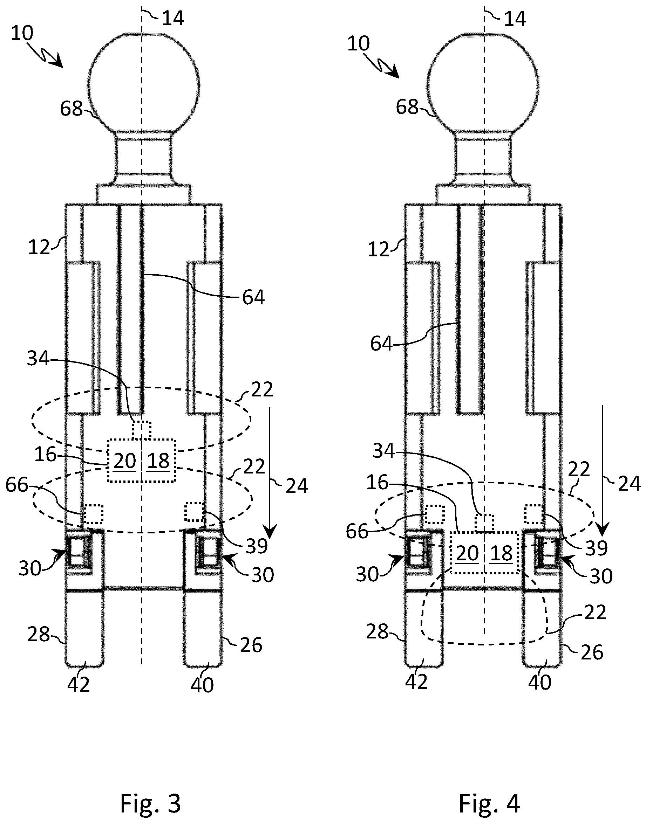

Der Magnetgreifer 10 hat einen Magneten 16, der in dem Gehäuse 12 angeordnet ist. Der Magnet 16 ist in Fig. 3 und 4 gepunktet dargestellt. Der Magnet 16 ist ein Permanentmagnet. Der Magnet 16 hat einen Nordpol 18 und einen Südpol 20. Ein Magnetfeld 22 des Magneten 16 erstreckt sich von dem Nordpol 18 bis zu dem Südpol 20. Das Magnetfeld 22 verläuft entlang von Magnetfeld-Linien, die in Fig. 3 und 4 gestrichelt dargestellt sind. Der Magnet 16 ist derart in dem Gehäuse 12 angeordnet, dass der Nordpol 18 und der Südpol 20 orthogonal zu der Längsachse 14 ausgerichtet sind.

Der Magnet 16 ist in einer geraden Verschieberichtung 24 zwischen einer Greifposition und einer Freigabeposition verschiebbar. In dem dargestellten Ausführungsbeispiel wird der Magnet durch eine Bewegung entlang oder in Richtung der Verschieberichtung 24 von der Freigabeposition in die Greifposition und durch eine Bewegung entgegengesetzt oder in entgegengesetzter Richtung zu der Verschieberichtung 24 von der Greifposition in die Freigabeposition überführt. Der Magnet 16 ist in Fig. 3 in der Freigabeposition und in Fig. 4 in der Greifposition dargestellt.

Der Magnetgreifer 10 hat einen ersten Polschuh 26 und einem zweiten Polschuh 28. Jeder Polschuh 26, 28 ist einteilig ausgebildet. Jeder Polschuh 26, 28 ist aus einem ferromagnetischen Material gebildet. In dem dargestellten Ausführungsbeispiel sind die beiden Polschuhe 26, 28 aus Eisen gebildet. Jeder Polschuh 26, 28 ist zum Führen eines Magnetfeldanteils des Magnetfelds 22 zu dem Werkstück für das Greifen des Werkstücks mittels des Magnetgreifers 10 ausgebildet.

Der erste Polschuh 26 und der zweite Polschuh 28 sind an entgegengesetzten Seiten des Gehäuses 12 angeordnet. Der Magnetgreifer 10 hat eine Befestigungs-Einrichtung 30, die vier Senkbohrungen für das Befestigen der beiden Polschuhen 26, 28 an dem Gehäuse 12 aufweist. Jeweils zwei Senkbohrungen sind in einem Polschuh 26, 28 ausgebildet.

Die beiden Polschuhe 26, 28 sind jeweils mittels der Befestigungs-Einrichtung 30 an dem Gehäuse 12 lösbar befestigt. Die Befestigung wird mittels Schrauben hergestellt, die in die Senkbohrungen eingesetzt und in Gewindebohrungen der Befestigung-Einrichtung 30, die in dem Gehäuse 12 ausgebildet sind und deren Positionen zu den Positionen der Senkbohrungen korrespondieren, eingeschraubt werden. Die dadurch hergestellten Schraubverbindungen ermöglicht ein Austauschen der beiden Polschuhe 26, 28. Die Befestigung-Einrichtung 30 kann die Schrauben aufweisen, mittels denen die beiden Polschuhen 26, 28 an dem Gehäuse 12 befestigt sind.

Das Verschieben des Magneten 16 von der Freigabeposition in die Greifposition erfolgt durch eine Verschiebung des Magneten 16 entlang der geraden Verschieberichtung 24 auf die beiden Polschuhe 26, 28 zu. Das Verschieben des Magneten 16 von der Greifposition in die Freigabeposition erfolgt durch eine Verschiebung des Magneten 16 von den beiden Polschuhen 26, 28 weg. Dadurch gelangt in der Freigabeposition ein geringerer Magnetfeldanteil des Magnetfelds 22 zu den Polschuhen 26, 28 als in der Greifposition.

Die lineare Verschiebung des Magneten 16 erfolgt mittels eines pneumatischen Antriebs 34 des Magnetgreifers 10. Der pneumatische Antrieb 34 kann einen Kolben, der mit dem Magneten 16 verbunden ist, aufweisen. Das Gehäuse 12 hat eine erste Öffnung 36 und eine zweite Öffnung 38, siehe Fig. 2. Durch die beiden Öffnungen 36, 38 kann Gas zugeführt werden, um den Kolben und damit den Magneten 16 zwischen der Freigabeposition und der Greifposition überzuführen. Dadurch ist der Magnet 16 pneumatisch verschiebbar. In einem alternativen, nicht gezeigten Ausführungsbeispiel kann der Magnet elektrisch oder mechanisch zwischen der Greifposition unter Freigabeposition verschiebbar ausgebildet sein.

Durch die Zufuhr von Gas über die erste Öffnung 36 in einen Gehäuseabschnitt oberhalb des Kolbens übt das Gas Druck auf eine obere Fläche des Kolbens aus, wodurch eine nach unten gerichtete Kraft auf den Kolben und damit den Magneten 16 ausgeübt wird. Als Reaktion darauf bewegt sich der Kolben und der Magnet 16 entlang der Verschieberichtung 24 auf die Polschuhen 26, 28 zu, bis der Magnet 16 die Greifposition einnimmt.

Durch die Zufuhr von Gas über die zweite Öffnung 38 in einen Gehäuseabschnitt unterhalb des Kolbens übt das Gas Druck auf eine untere Fläche des Kolbens aus, wodurch eine nach oben gerichtete Kraft auf den Kolben und damit den Magneten 16 ausgeübt wird. Als Reaktion darauf bewegt sich der Kolben und der Magnet 16 entgegengesetzt zu der Verschieberichtung 24 von den Polschuhen 26, 28 weg, bis der Magnet 16 die Freigabeposition einnimmt.

Der Magnetgreifer 10 hat einen Position-Sensor 39 zum Detektieren, ob sich der Magnet 16 in der Greifposition oder in der Freigabeposition befindet. Der Position-Sensor 39 ist in Fig. 3 und 4 gepunktete dargestellt. Der Position-Sensor 39 ist dazu ausgebildet, die Greifposition und die Freigabeposition basierend auf einer Detektion des Magnetfelds 22 zu detektieren. Dadurch kann die Zufuhr von Gas über die erste Öffnung 36 unterbrochen werden, wenn der Position-Sensor 39 detektiert, dass der Magnet 16 die Greifposition eingenommen hat, oder die Zufuhr von Gas über die zweite Öffnung 38 kann unterbrochen werden, wenn der Position-Sensor 39 detektiert, dass der Magnet 16 die Freigabeposition eingenommen hat.

Fig. 3 zeigt, dass der Magnet 16 in der Freigabeposition nicht zwischen den beiden Polschuhen 26, 28 angeordnet ist.

Der erste Polschuh 26 hat eine Werkstück-Kontaktfläche 40 und der zweite Polschuh 28 hat eine Werkstück-Kontaktfläche 42. Die beiden Werkstück-Kontaktflächen 40, 42 dienen zum Kontaktieren eines von der Magnetgreifer 10 gegriffenen Werkstücks.

Die beiden Werkstück-Kontaktflächen 40, 42 sind jeweils eben ausgebildet. Die beiden Werkstück-Kontaktflächen 40, 42 sind parallel zueinander ausgerichtet. Die beiden Werkstück-Kontaktflächen 40, 42 sind parallel zu der Längsachse 14 ausgerichtet. Die beiden Werkstück-Kontaktflächen 40, 42 und die Verschieberichtung 24 definieren zwischen sich einen Kontaktflächen-Winkel 44, siehe Fig. 1. Der Kontaktflächen-Winkel 44 beträgt 180°. Anders formuliert, die Werkstück-Kontaktflächen 40, 42 sind parallel zu der Verschieberichtung 24 ausgerichtet.

Die beiden Werkstück-Kontaktflächen 40, 42 sind jeweils als eine einzige zusammenhängende Fläche ausgebildet. Die beiden Werkstück-Kontaktflächen 40, 42 bilden eine ebene Haltefläche des Magnetgreifers 10. Dadurch ist der Magnetgreifer 10 zum Greifen von Werkstücken in Form von ebenen Blechen ausgebildet.

Falls Werkstücke mit einer anderen Form mittels des Magnetgreifers 10 gegriffenen werden sollen, können die beiden Polschuhen 26, 28 durch andere Polschuhe ausgetauscht werden, deren Werkstück-Kontaktflächen der Form der zu greifenden Werkstücken folgt.

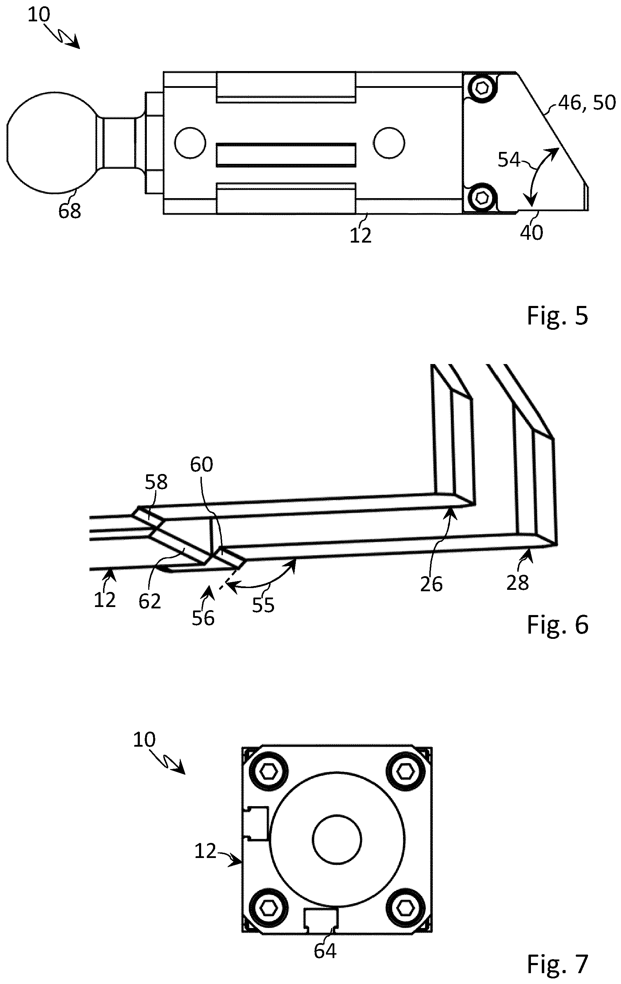

Jeder Polschuh 26, 28 ist für das Lenken eines Magnetfeldanteils des Magnetfelds 22 zu seiner Werkstück-Kontaktfläche 40, 42 ausgebildet. Der erste Polschuh 26 hat eine Wirkstruktur 46 für das Lenken des Magnetfeldanteils zu seiner Werkstück-Kontaktfläche 40 und der zweite Polschuh 26 hat eine Wirkstruktur 48 für das Lenken des Magnetfeldanteils zu seiner Werkstück-Kontaktfläche 42, siehe Fig. 2 und 5. Die Wirkstruktur 46 des ersten Polschuh 26 und die Wirkstruktur 48 des zweiten Polschuhs 28 sind, insbesondere strukturell, gleich ausgebildet.

Die beiden Wirkstrukturen 46, 48 weisen jeweils eine Schräge 50, 52 auf. Mittels den Schrägen 50, 52 wird der in den Polschuhen 26, 28 geführte Magnetfeldanteil auf die Werkstück-Kontaktflächen 40, 42 gelenkt, wodurch sich der Magnetfeldanteil an den Werkstück-Kontaktflächen 40, 42 erhöht.

Die Schräge 50 des ersten Polschuhs 26 und die Werkstück-Kontaktfläche 40 des ersten Polschuhs 26 definieren zwischen sich einen Schrägen-Winkel 54, siehe Fig. 5. Die Schräge 52 des zweiten Polschuhs 28 und die Werkstück-Kontaktfläche 42 des zweiten Polschuhs 28 definieren zwischen sich einen Schrägen-Winkel. Der Schrägen-Winkel 54 des ersten Polschuhs 26 und der Schrägen-Winkel des zweiten Polschuhs 28 betragen jeweils 60°.

Fig. 3 und 4 zeigen, dass der Magnet 16 derart in dem Gehäuse angeordnet ist, dass in der Greifposition der erste Polschuh 26 als Nordpol und der zweite Polschuh 28 als Südpol wirken.

In der Greifposition wird ein Magnetfeldanteil des Magnetfelds 22 zu den Werkstück-Kontaktflächen 40, 42 gelenkt, der, falls ein Werkstück an den Werkstück-Kontaktflächen 40, 42 angeordnet ist, eine Magnetkraft auf das Werkstück bewirkt. Die Magnetkraft ist auf die Werkstück-Kontaktflächen 40, 42 zu gerichtet, so dass das Werkstück mittels der Magnetkraft gegen die Werkstück-Kontaktflächen 40, 42 gedrückt, insbesondere gepresst, wird. Falls die Magnetkraft größer als eine Gewichtskraft des Werkstücks ist, kann das Werkstück von dem Magnetgreifer 10 gegriffen sein und der Magnetgreifer 10 kann das Werkstück anheben.

In der Freigabeposition wird kein Magnetfeldanteil zu den Werkstück-Kontaktflächen 40, 42 gelenkt. Alternativ kann ein Magnetfeldanteil des Magnetfelds 22 zu den Werkstück-Kontaktflächen 40, 42 gelenkt werden, der, falls ein Werkstück an den Werkstück-Kontaktflächen 40, 42 angeordnet ist, keine Magnetkraft auf das Werkstück bewirkt, die größer als eine Gewichtskraft des Werkstücks ist. Dadurch kann das Werkstück von dem Magnetgreifer 10 gelöst werden. Das Werkstück kann von dem Magnetgreifer 10 nicht gegriffen sein.

Der Magnetgreifer 10 hat eine Positionierungs-Einrichtung 56, siehe Fig. 6. Die Positionierungs-Einrichtung 56 dient für das Positionieren eines Werkstücks relativ zu dem Magnetgreifer 10. Die Positionierungs-Einrichtung 56 grenzt an den Werkstück-Kontaktflächen 40, 42 an. Die Positionierungs-Einrichtung 56 ist eine Führung in Form einer Gleitfläche, die dazu ausgebildet ist, ein Werkstück zu den Werkstück-Kontaktflächen 40, 42 zu führen. Die Gleitfläche und die Werkstück-Kontaktflächen 40, 42 definieren zwischen sich einen Gleitflächen-Winkel 55. Der Gleitflächen-Winkel 55 beträgt 130°. Der Gleitflächen-Winkel 55 kann einen Betrag in einem Bereich von 110° bis 160° aufweisen. Dadurch gleitet ein Werkstück während dem Führen des Werkstücks zu den beiden Werkstück-Kontaktflächen 40, 42 mittels der Positionierung-Einrichtung 56 der Gleitfläche entlang, bis das Werkstück flächig gegen die Werkstück-Kontaktflächen 40, 42 anliegt.

In dem dargestellten Ausführungsbeispiel ist die Positionierungs-Einrichtung 56, insbesondere die Gleitfläche, aus drei Flächenabschnitten 58, 60, 62 gebildet. Die drei Flächenabschnitte 58, 60, 62 sind parallel zueinander ausgerichtet. Der erste Flächenabschnitt 58 wird durch den ersten Polschuh 26 gebildet. Der zweite Flächenabschnitt 60 wird durch den zweiten Polschuh 28 gebildet. Der dritte Flächenabschnitt 62 wird durch das Gehäuse 12 gebildet.

Der erste Flächenabschnitt 58 grenzt an die Werkstück-Kontaktfläche 40 des ersten Polschuhs 26 an. Der zweite Flächenabschnitt 60 grenzt an die Werkstück-Kontaktfläche 42 des zweiten Polschuhs 28 an.

Das Gehäuse 12 hat eine Aufnahme 64 in Form einer Nut zum Aufnehmen einer Versorgungsleitung, siehe insbesondere Fig. 7. Mittels der Nut 64 kann zumindest eine Versorgungsleitung, beispielsweise eine Stromleitung, in einer definierten Position positioniert oder in der definierten Position an dem Gehäuse 12 angeordnet und/oder befestigt werden, weshalb die Versorgungsleitung das Greifen eines Werkstücks mit dem Magnetgreifer 10 nicht behindert. Die Nut 64 hat einen T-förmigen Querschnitt.

Der Magnetgreifer 10 hat einen Werkstück-Sensor 66 zum Detektieren eines Werkstücks. Der Werkstück-Sensor 66 ist in Fig. 3 und 4 gepunktet dargestellt. Mittels des Werkstück-Sensors 66 kann detektiert werden, ob ein Werkstück korrekt an den Werkstück-Kontaktflächen 40, 42 angeordnet ist oder nicht.

Der Magnetgreifer 10 hat eine Manipulator-Schnittstelle 68 zum Befestigen des Magnetgreifers 10 an einen Manipulator, beispielsweise an einem Roboterarm. Die Manipulator-Schnittstelle 68 ist an dem Gehäuse 12, insbesondere mittels einer Schraubverbindung, befestigt. Die Manipulator-Schnittstelle 68 und die Polschuhe 26, 28 sind an entgegengesetzten Seiten des Gehäuses 12 angeordnet.

Die Manipulator-Schnittstelle 68 ist kugelförmig für das Bilden eines Kugelgelenks ausgebildet. Der Manipulator kann eine Aufnahme für das Aufnehmen der kugelförmigen Manipulator-Schnittstelle 68 aufweisen. Wenn die Manipulator-Schnittstelle 68 in die Aufnahme des Manipulators eingesetzt ist, ist ein Kugelgelenk ausgebildet.

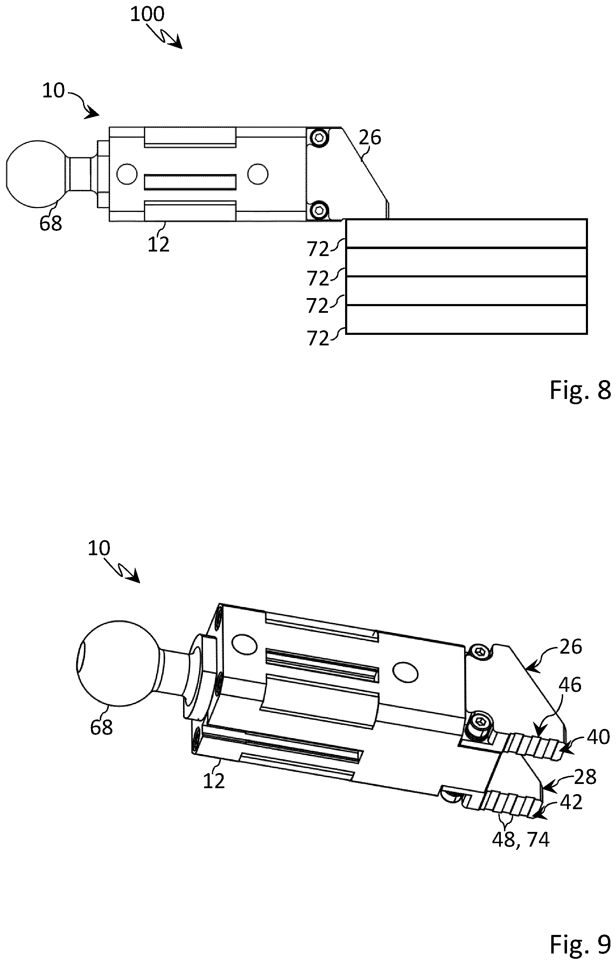

Fig. 8 zeigt einen Stapel von mehreren Werkstücken 72. Die mehreren Werkstücke 72 sind übereinander angeordnet, insbesondere gestapelt.

Jedes Werkstück 72 ist aus Eisen gebildet. Jedes Werkstück 72 ist ein Blech. Eine Breite und eine Länge jedes Werkstücks 72 betragen mehr als das Fünffache einer Dicke des Werkstücks 72.

Mit dem Magnetgreifer 10 soll das oberste Werkstück 72 von dem Stapel aus mehreren Werkstücken 72 gegriffen werden, ohne dabei die übrigen Werkstücke 72 zu greifen.

Der Magnetgreifer 10 und das oberste Werkstück 72 bilden ein Magnetgreifer-System 100. In einem Greifzustand befindet sich der Magnet 16 in der Greifposition und das Werkstück 72 ist mittels der Magnetkraft gegen die beiden Werkstück-Kontaktflächen 40, 42 gedrückt. In einem Freigabezustand befindet sich der Magnet 16 in der Freigabeposition und das Werkstück 72 ist nicht mittels der Magnetkraft gegen die Werkstück-Kontaktflächen 40, 42 gedrückt.

Für das Greifen des Werkstücks 72 wird der Magnet 16 in die Freigabeposition überführt und der Magnetgreifer 10 relativ zu dem obersten Werkstück 72 platziert, so dass das oberste Werkstück 72 in der Nähe der Werkstück-Kontaktflächen 40, 42 ist. Anschließend wird der Magnet 16 in die Greifposition überführt, so dass der von den beiden Polschuhen 26, 28 geführte Magnetfeldanteils des Magnetfelds 22 ein für das Greifen des Werkstücks 72 erforderlicher Anteil des Magnetfelds 22 ist.

Durch die Wirkstrukturen 46, 48 wird der Magnetfeldanteil des Magnetfelds 22 derart zu den Werkstück-Kontaktflächen 40, 42 geführt, dass auf dem Stapel von mehreren Werkstücken 72 eine Magnetkraft wirkt. Die Magnetkraft ist nur für das Greifen des obersten Werkstücks 72 geeignet. Mit anderen Worten, die Magnetkraft, die auf das oberste Werkstück 72 wirkt, ist größer als eine Gewichtskraft des obersten Werkstücks 72. Die Magnetkraft, die auf das unmittelbar unter dem obersten Werkstück 72 liegende Werkstück 72 wirkt, ist für das Greifen dieses Werkstücks 72 nicht ausreichend.

Durch die Magnetkraft wird das oberste Werkstück 72 gegen die Positionier-Einrichtung 56 gedrückt und das Werkstück 72 gleitet der Positionierungs-Einrichtung 56 entlang, bis das Werkstück 72 die Werkstück-Kontaktflächen 40, 42 flächig kontaktiert. Die Magnetkraft drückt das Werkstück 72 gegen die Werkstück-Kontaktflächen 40, 42.

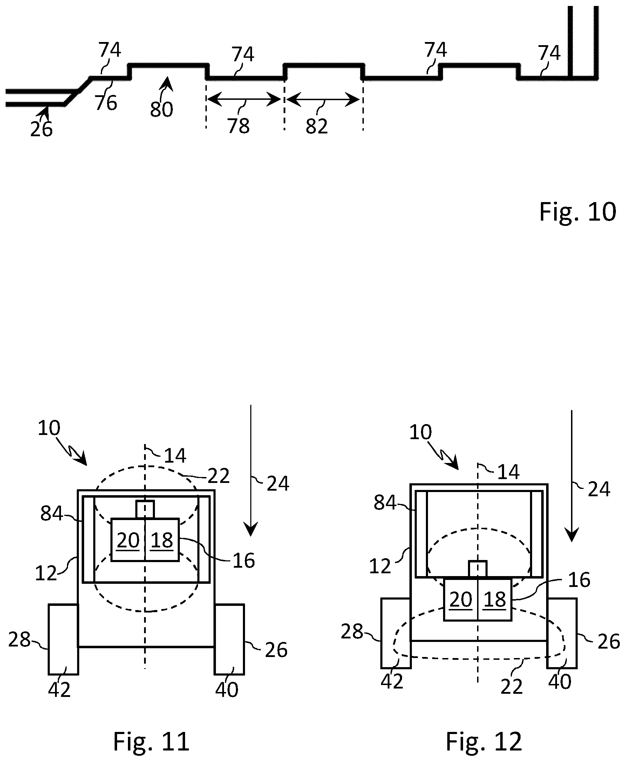

In Fig. 9 und 10 ist ein weiteres Ausführungsbeispiel des Magnetgreifers 10 der Fig. 1 bis 8 gezeigt, wobei für identische und funktionell äquivalente Elemente gleiche Bezugszeichen verwendet sind und insoweit auf die obigen Ausführungen zum Ausführungsbeispiel der Fig. 1 bis 8 verwiesen werden kann, so dass im Wesentlichen nur auf die bestehenden Unterschiede eingegangen wird.

Die beiden Werkstück-Kontaktflächen 40, 42 sind jeweils eine Fläche, die aus mehreren voneinander getrennten Flächenabschnitten zusammengesetzt ist. Anders formuliert, die Werkstück-Kontaktflächen 40, 42 sind keine zusammenhängenden Flächen.

Jede Wirkstruktur 46, 48 hat vier Vorsprünge 74 für das Lenken des Magnetfeldanteils und für das Bilden der Werkstück-Kontaktfläche 40, 42. Fig. 10 zeigt die Vorsprünge 74 des ersten Polschuhs 26 in einer vergrößerten seitlichen Darstellung. Jeder Vorsprung 74 hat ein freies Ende 76, das die Werkstück-Kontaktfläche 40 abschnittsweise bildet.

Drei der vier Vorsprünge 74 haben eine gleiche Länge 78. Dadurch sind drei der vier Vorsprünge 74 gleich lang ausgebildet. Zwei benachbarte Vorsprünge 74 sind mittels einer Ausnehmung 80 voneinander getrennt. Alle Ausnehmungen 80 habe einen gleiche Länge 82. Die Länge 82 jeder Ausnehmung 80 und die Länge 78 jeder der drei der vier Vorsprünge 74 haben einen gleichen Betrag.

In Fig. 11 und 12 ist ein weiteres Ausführungsbeispiel des Magnetgreifers 10 der Fig. 1 bis 8 gezeigt, wobei für identische und funktionell äquivalente Elemente gleiche Bezugszeichen verwendet sind und insoweit auf die obigen Ausführungen zum Ausführungsbeispiel der Fig. 1 bis 8 verwiesen werden kann, so dass im Wesentlichen nur auf die bestehenden Unterschiede eingegangen wird.

Der Magnetgreifer 10 hat eine Abschirm-Einrichtung 84. Die Abschirm-Einrichtung 84 ist dazu ausgebildet, ein seitliches Austreten des Magnetfelds 22 des Magneten 16 aus dem Gehäuse 12 zumindest zu verhindern, wenn der Magnet 16 sich in der Freigabeposition befindet. Die Abschirm-Einrichtung 84 ist aus Eisen gebildet. Die Abschirm-Einrichtung 84 ist holzylinderförmig ausgebildet.

Fig. 11 zeigt den Magneten 16 in der Freigabeposition. In der Freigabeposition ist der Magnet 16 in einem Innenraum der hohlzylinderförmigen Abschirm-Einrichtung 84 angeordnet. Dadurch wird ein seitliches Austreten des Magnetfelds 22 aus dem Gehäuse 12 verhindert.

Fig. 12 zeigt den Magneten 16 in der Greifposition. In der Greifposition ist der Magnet 16 außerhalb des Innenraums der hohlzylinderförmigen Abschirm-Einrichtung 84 angeordnet. Das Magnetfeld 22 wird durch die beiden Polschuhen 26, 28 zu den Werkstück-Kontaktflächen 40, 42 gelenkt.

## Patentansprüche

1. Magnetgreifer (10) zum Greifen eines ferromagnetischen Werkstücks (72), aufweisend:
- ein Gehäuse (12),
- einen Magneten (16), der in dem Gehäuse (12) angeordnet ist und der entlang einer Verschieberichtung (24) zwischen einer Greifposition zum Greifen des ferromagnetischen Werkstücks (72) und einer Freigabeposition zum Freigeben des ferromagnetischen Werkstücks (72) verschiebbar ist, und
- einer Anzahl von Polschuhen (26, 28), die an dem Gehäuse (12) befestigt sind,
- wobei jeder Polschuh (26, 28) eine Werkstück-Kontaktfläche (40, 42) aufweist und für das Führen eines Magnetfeldanteils des Magneten (16) zu der Werkstück-Kontaktfläche (40, 42) ausgebildet ist,
- wobei jede Werkstück-Kontaktfläche (40, 42) zwischen sich und der Verschieberichtung (24) einen Kontaktflächen-Winkel (44) definiert,
- wobei der Kontaktflächen-Winkel (44) ein Betrag in einem Bereich von 170° bis 190° aufweist.

2. Magnetgreifer (10) nach Anspruch 1,
- wobei das Gehäuse (12) sich entlang einer Längsachse (14) erstreckt,
- wobei die Verschieberichtung (24) parallel zu der Längsachse (14) des Gehäuses (12) ausgerichtet ist.

3. Magnetgreifer (10) nach einem der voranstehenden Ansprüche,
- wobei jeder Polschuh (26, 28) eine Wirkstruktur (46, 48) zum Lenken des Magnetfeldanteils aufweist.

4. Magnetgreifer (10) nach Anspruch 3,
- wobei die Wirkstruktur (46, 48) eine Schräge (50, 52) aufweist,
- wobei die Schräge (50, 52) und die Werkstück-Kontaktfläche (40, 42) zwischen sich einen Schrägen-Winkel (54) definieren,
- wobei der Schrägen-Winkel (54) ein Betrag in einem Bereich von 5° bis 85°, insbesondere 15° bis 75°, vorzugsweise 40° bis 60°, aufweist.

5. Magnetgreifer (10) nach einem der voranstehenden Ansprüche 3 oder 4,
- wobei die Wirkstruktur (46, 48) eine Mehrzahl von Vorsprüngen (74) für das Lenken des Magnetfeldanteils und für das Bilden der Werkstück-Kontaktfläche (40, 42) aufweist.

6. Magnetgreifer (10) nach Anspruch 5,
- wobei die Mehrzahl von Vorsprüngen (74) zumindest einen ersten Vorsprung und einen zweiten Vorsprung aufweisen,
- wobei der erste Vorsprung und der zweite Vorsprung zueinander benachbart sind,
- wobei die Wirkstruktur (46, 48) zwischen dem ersten Vorsprung und dem zweiten Vorsprung eine Ausnehmung (80) aufweist,
- wobei eine Tiefe und/oder eine Länge (82) der Ausnehmung (80) einen Wert aufweist, der um höchstens 25% von einem Wert einer Länge (78) des ersten Vorsprungs und/oder einem Wert einer Länge des zweiten Vorsprungs abweicht.

7. Magnetgreifer (10) nach einem der voranstehenden Ansprüche,
- wobei der Magnetgreifer (10) eine Positionierungs-Einrichtung (56) für das Positionieren des Werkstücks (72) an der Werkstück-Kontaktfläche (40, 42) aufweist.

8. Magnetgreifer (10) nach einem der voranstehenden Ansprüche,
- wobei die Anzahl von Polschuhen (26, 28) einen ersten Polschuh (26) und einen zweiten Polschuh (28) aufweisen,
- wobei der Magnet (16) derart in dem Gehäuse (12) angeordnet ist, dass in der Greifposition der erste Polschuh (26) als Nordpol und der zweite Polschuh (28) als Südpol wirken.

9. Magnetgreifer (10) nach einem der voranstehenden Ansprüche,
- wobei der Magnet (16) elektrisch, pneumatisch oder mechanisch zwischen der Greifposition und der Freigabeposition verschiebbar ist.

10. Magnetgreifer (10) nach einem der voranstehenden Ansprüche,
- wobei der Magnetgreifer (10) einen Position-Sensor (39) zum Detektieren der Greifposition und/oder der Freigabeposition aufweist, und/oder
- wobei der Magnetgreifer (10) einen Werkstück-Sensor (66) zum Detektieren des Werkstücks (72) aufweist.

11. Magnetgreifer (10) nach einem der voranstehenden Ansprüche,
- wobei das Gehäuse (12) eine Aufnahme (64), insbesondere in Form einer Nut, zum Aufnehmen eines Werkstück-Sensors (66) und/oder einer Versorgungsleitung aufweist.

12. Magnetgreifer (10) nach einem der voranstehenden Ansprüche,
- wobei der Magnetgreifer (10) eine Manipulator-Schnittstelle (68) zum Befestigen des Magnetgreifers (10) an einem Manipulator aufweist.

13. Magnetgreifer (10) nach einem der voranstehenden Ansprüche,
- wobei ein Gehäuseabschnitt des Gehäuses (12) dazu ausgebildet ist, ein Austreten des Magnetfelds (22) des Magneten (16) aus dem Gehäuseabschnitt weitgehend zu unterdrücken, oder
- wobei der Magnetgreifer (10) eine Abschirm-Einrichtung (84) aufweist, die dazu ausgebildet ist, ein Austreten des Magnetfelds (22) des Magneten (16) aus dem Gehäuse (12) zumindest abschnittsweise zu verhindern.

14. Magnetgreifer-System (100), aufweisend:
- einen Magnetgreifer (10) nach einem der voranstehenden Ansprüche, und
- das ferromagnetische Werkstück (72),
- wobei in einem Greifzustand der Magnet (16) sich in der Greifposition befindet und das ferromagnetische Werkstück (72) mittels einer Magnetkraft gegen jede Werkstück-Kontaktfläche (40, 42) gedrückt ist,
- wobei in einem Freigabezustand der Magnet (16) sich in der Freigabeposition befindet und das ferromagnetische Werkstück (72) nicht, insbesondere mittels einer Magnetkraft, gegen jede Werkstück-Kontaktfläche (40, 42) gedrückt ist.

15. Magnetgreifer-System (100) nach Anspruch 14 und nach Anspruch 5 oder 6,
- wobei zumindest einer der Vorsprünge (74) eine Länge (78) aufweist, deren Wert um höchstens 25% von einem Wert einer Dicke des Werkstücks (72) abweicht.
